# EUROPEAN PATENT SPECIFICATION

(11) **EP 1 198 984 B1**
(45) Date of publication and mention of the grant of the patent: **12.01.2005**
(21) Application number: 01203857.6
(22) Date of filing: 11.10.2001
(51) Int. Cl.: A01G 9/02

(54) **Multifunctional flower box**
Multifunktioneller Blumenkasten
Jardinière multifonctionnelle

(30) Priority: 16.10.2000 IT MI002228
(43) Date of publication of application: 24.04.2002
(73) Proprietor: Plastecnic S.p.A., 23888 Perego, Lecco (IT)
(72) Inventor: Galletti, Davide, 23870 Cernusco Lombardone, Lecco (IT)
(74) Representative: De Gregori, Antonella

(56) References cited:
- DE-U- 20 009 442
- FR-A- 2 510 349
- US-A- 4 048 754

## Description

The present invention has as its object a multifunctional flower box.

As is known, different types of flower box exist, including in particular boxes which can be attached to a wall, or else attached to suitable supports, so as to be suspended above the ground, see e.g. document US-A-4 048 754.

In fact, known flower boxes are intended for a use such that they can be placed on the ground or placed inside box holders (cages or supports) made of metal (e.g. iron wire or wrought iron) or of plastic; as previously indicated, boxes intended for being attached to a wall also exist.

Nevertheless, one notes that box holders made of metal are generally expensive, heavy, difficult to adjust and tend to damage the railings.

Plastic box holders, although partly overcoming the aforementioned defects, are still to be considered an outer part of the box itself.

The purpose of the present invention is, therefore, to realise a multifunctional flower box which overcomes the aforementioned problems, providing a structure designed for being hung in various ways, all simple and secure, according to requirements.

A further purpose of the present invention is to realise a multifunctional flower box, of the hanging type, which can be adjustably adaptable to balcony railings or other supports.

Another purpose of the present invention is to realise a multifunctional flower box which can be coupled with another box which is similar to it, and adapted to a balcony railing or another similar support.

Another purpose of the present invention is to realise a multifunctional flower box which can be fixed directly onto a wall into a hanging position.

Yet another purpose of the present invention is to realise a multifunctional flower box inside which, during transportation, are housed, in a rational manner, all the components which allow it to be multifunctional.

These and other purposes are achieved by a multifunctional flower box according to claim 1, to which we refer for the sake of brevity.

Further characteristics of the invention are defined in the claims attached to the present application.

Further purposes and advantages of the present invention will become clear from the following description and the annexed drawings, provided as an explanatory and not limiting example, in which:

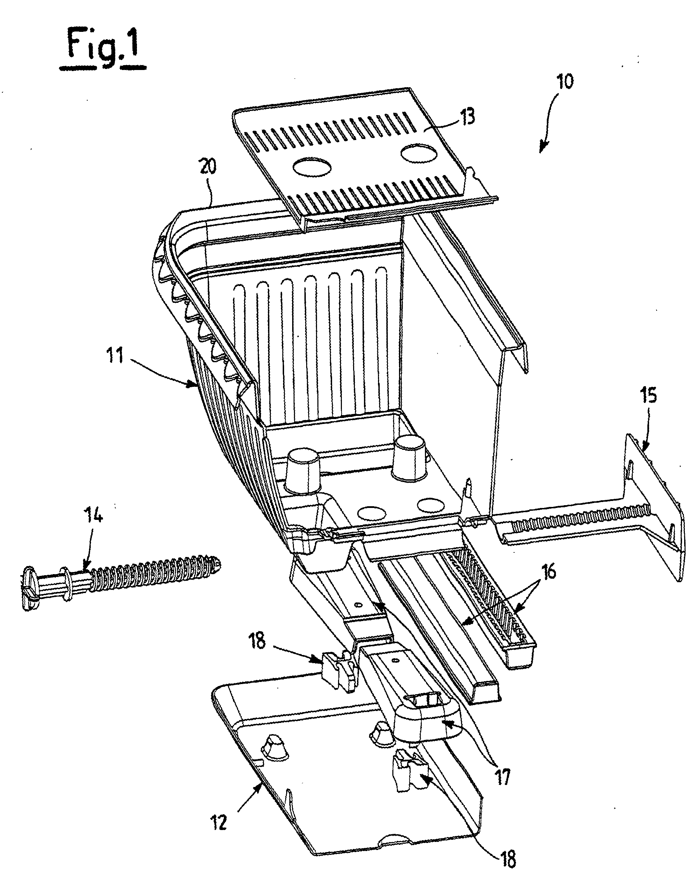

- figure 1 is an exploded axonometric view of the multifunctional flower box, according to the present invention

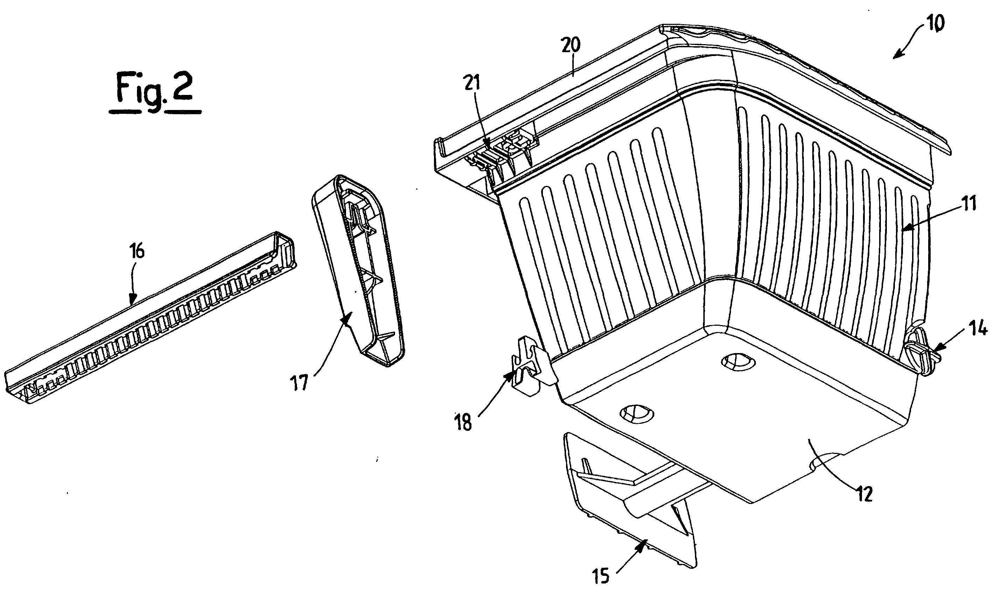

- figure 2 shows an exploded axonometric view, which indicates the pieces to be mounted, in sequence, to obtain a first type of use of the flower box of the invention;
- figure 3 shows a rear axonometric view of the flower box according to the invention, in a second type of use;
- figures 4 and 5 show axonometric views from above and below, respectively, of a pair of flower boxes according to the invention in a third type of use;

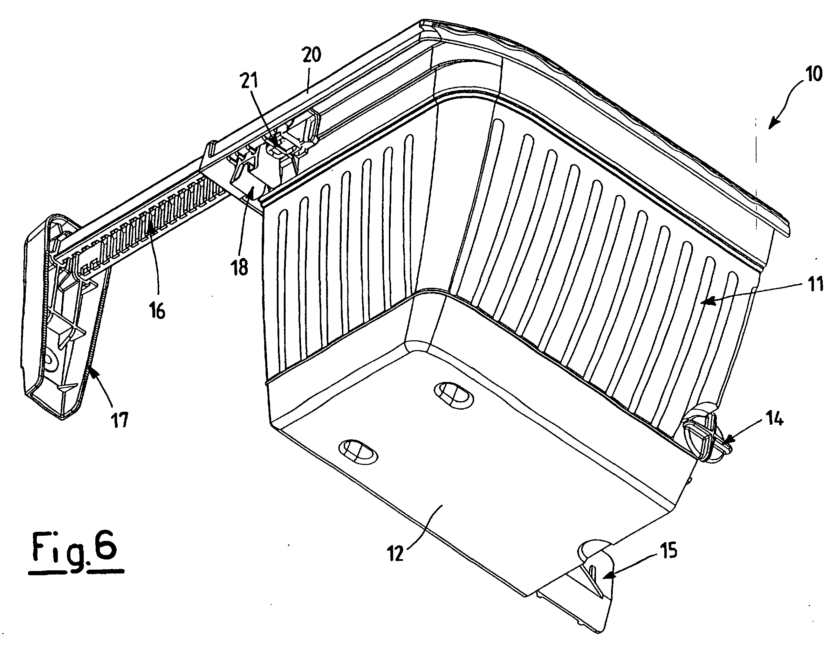

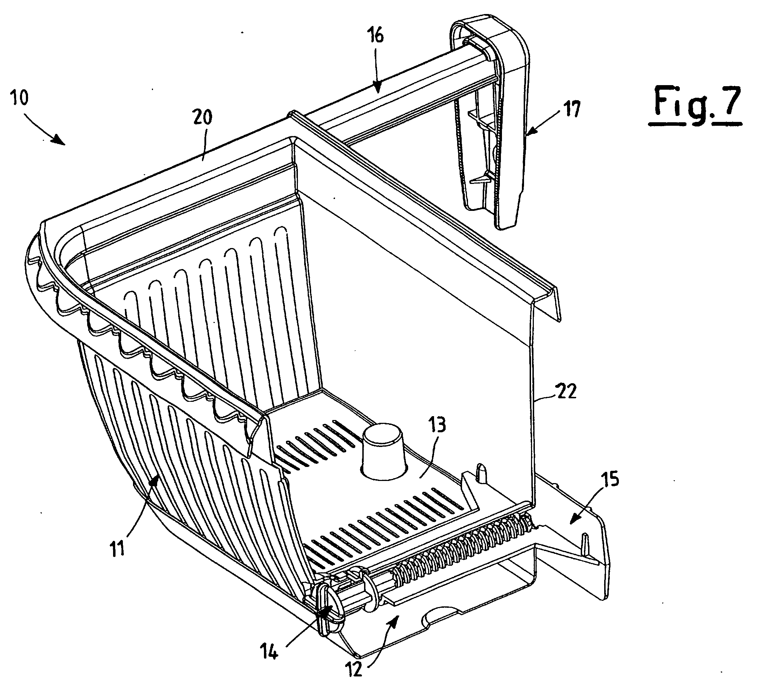

- figures 6 and 7 show axometric views from above and below, respectively, of a flower box of the invention, mounted in the first type of use; and
- figure 8 shows, axonometrically, a flower box according to the present invention in a fourth type of use.

With particular reference to the figures mentioned, the multifunctional flower box according to the present invention is wholly indicated with the reference number 10.

As can be seen in the attached figures, in many of which the multifunctional flower box 10 has only been half-represented given its symmetry with respect to an axis perpendicular to it, the multifunctional flower box 10 comprises a container body 11, a lower tray 12 and a supporting plane 13.

The supporting plane 13 acts as a base, and presents numerous slits. It is arranged inside the box 10 and is designed for holding the roots of the plant, whilst allowing the suitable absorption and/or drainage of water from the lower tray.

The box 10 also comprises a threaded regulation knob14 and a rear regulator plate 15, as well as a pair of rods 16, capable of being associated with respective heads 17 to form support brackets, capable of being fixed through shear pins 18.

In fact, each bracket is divided into two pieces (which can, however, be irreversibly coupled together), i.e. into one rod part 16 and one head part 17, so as to reduce the maximum encumbrance of the brackets.

It should be noted that all of the pieces described can be sold included in the space between the body 11 of the box 10 and the tray 12, without fitting the box's attachments which can thus be sold without worsening transportation costs or pieces getting lost.

It should be noted that the pieces contained are held in position, during the transportation of the boxes 10, through the coupling between the body 11 of the box and the tray 12.

Such a system is also used for holding the tray 12 with the water reserve when it is hung.

The present invention can also be configured as a structure intended to be hung.

In order to support the weight of the box 10 it is intended for most of the burden to be carried by the rear rim (suitably supported and strengthened) of the box.

In order to hold the box 10 in the desired position the two side rims 20 are used as guides, making the two brackets 16, the stroke of which is adjustable, slide inside.

The safety against falling is assured through a first adjustment with a small rod and then through the insertion of a shear pin 18, inside grilles 21, formed in the lower part of the side rim 20, so as not to ruin the aesthetics and not to make them inaccessible when the box is opened.

In order to regulate the horizontal position, as well as the correct fitting to the railing of the box 10, provision is made to form a regulator plate 15 between the body 11 of the box and the tray 12, which is accessible from the front through a knob14 and which can regulate the stroke of the same regulator plate 15, through the rotation thereof.

In other words, when one wishes to use the box 10 hung to the railing of a balcony, one makes provision, in sequence, for slotting the brackets 16 into the side rims 20 up to the desired point, inserting the shear pins 18, engaging with the grille 21, and subsequently, placing the box 10 into position and finally regulating its position through the frontal regulation knob14.

In order to remove the box 10 from the balcony one only has to, firstly, completely screw in the knob14, thus making the regulator plate 15 move inwards, and then carry out all of the described operations in reverse order.

Since the regulation of the support brackets is in intervals of eight millimetres, and the rear rim twenty millimetres wide, one can be sure that it will be possible to make the rear rim, supporting most of the forces in the system, work correctly.

The rod 16 and head 17 pieces, which form, if coupled, the support bracket, are also assigned other functions.

The two heads 17 which are supplied, used as wedges and fixed to the wall with a screw or with a peg, allow the box to be hung in a convenient and functional way.

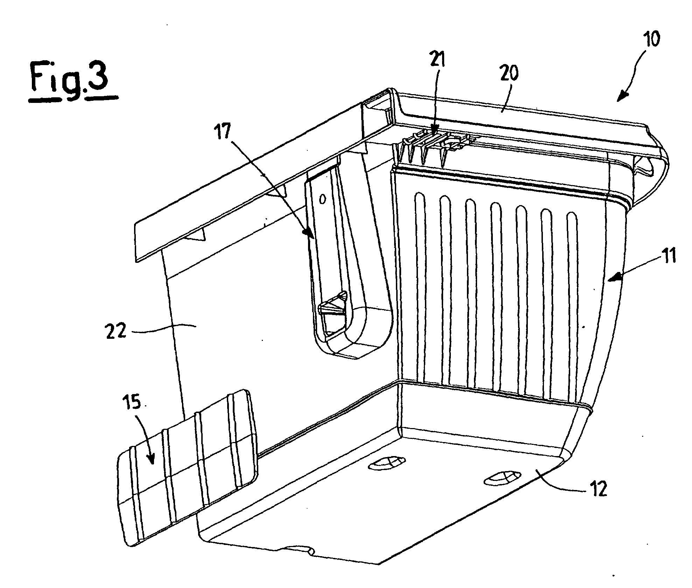

This is particularly clear in figure 3, where one of the heads 17 can be seen applied to the back 22 of the box 10.

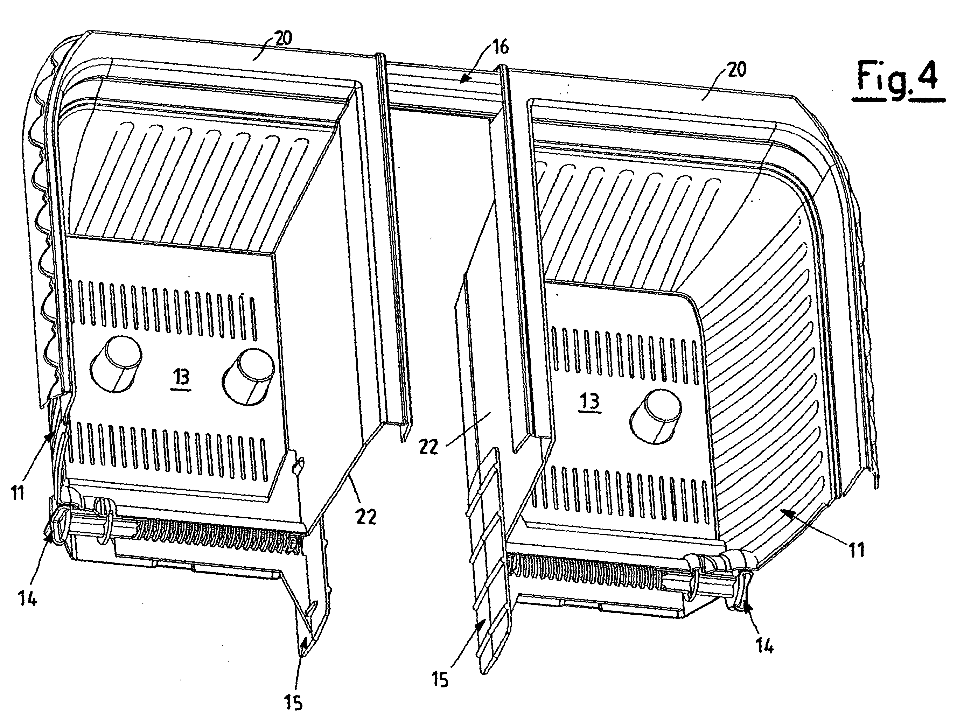

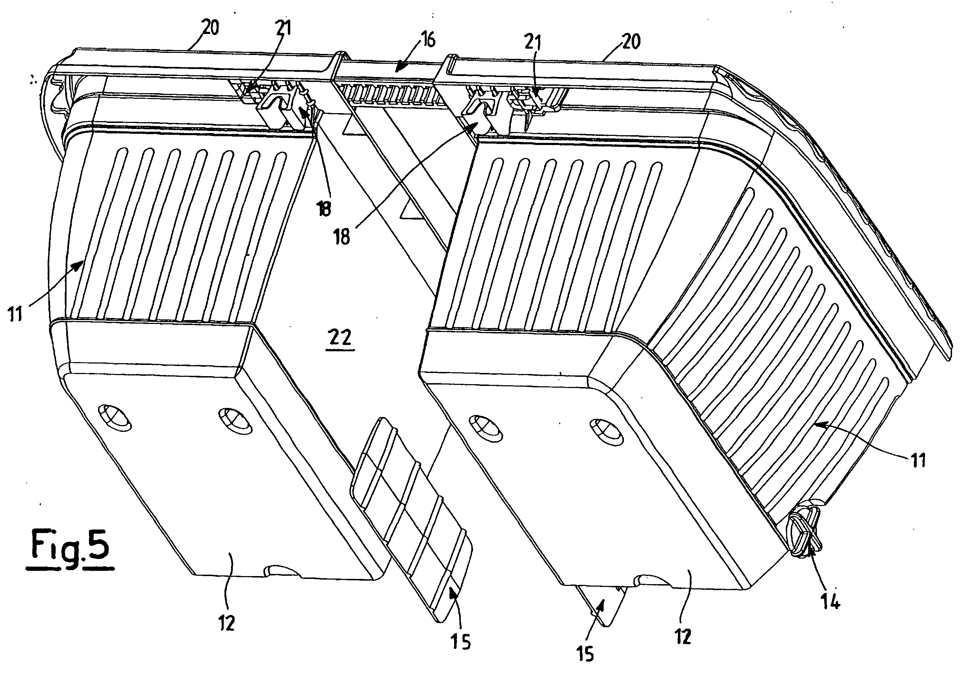

The rods 16, on the other hand, can be used, for example, when there are many boxes, for coupling them back-to-back with the railings using them as already described for individual use, as represented in figures 4-5.

In such a way it will be possible, for example, to grow flowers inclined towards the outside and ornamental plants on the inside.

In the practical embodiment of the invention provision was made to ensure that all of the parts to be realised could be manufactured in thermoplastic material (suitably tried and tested, given the operation in suspension) and that the moulds for the manufacture of all of the pieces were of the male-female type (with the exception of the two guide holes in the side rims of the box), in order to limit the necessary investments.

The shear pin 18, has a clamp form, but could also be realised in other different forms, provided that they are suitable for the purpose.

The base 13 is housed inside the box, while the knob14 and the regulator plate 15, screwed together in the dedicated seat and in a position of minimum encumbrance, and the remaining pieces housed and held in the empty space formed between the box and the attached tray, allow the easy transportation of the box 10.

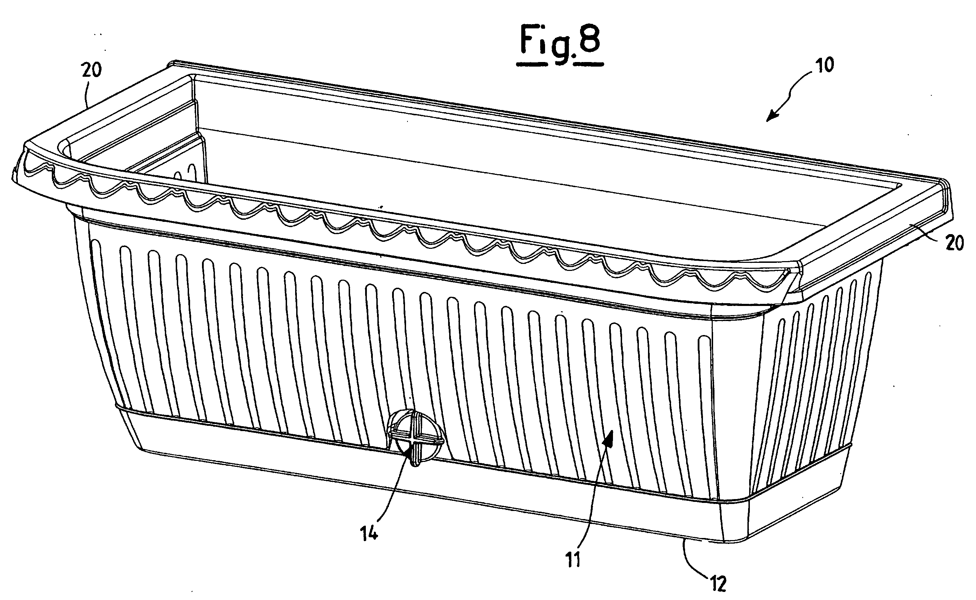

The box 10, finally, can be used, as illustrated in figure 8, that is to say in the traditional manner, without affecting its multifunctionality.

From the description which has been made the characteristics of the multifunctional flower box which is the object of the present invention are clear, just as the advantages and operation are also clear.

We would like to now express the following concluding considerations and observations, so as to define the aforementioned advantages with greater precision and clearness.

Firstly, it should be noted that thanks to the present invention a flower box of the multifunctional type which can be sold in a kit is realised which allows the following uses.

For example, the box of the invention can be used as a hanging box, for example adaptable to the railings of a balcony, through the regulatable brackets which can slide in the side rims.

Another use of the box is as a double hanging box, adaptable to railings of a balcony through the rods with a regulatable stroke, which can slide in the side rims.

Yet another use of the box is as a box hanging from a wall by means of the wedges inserted in the rear rim.

All this obviously does not stop the box being used in the traditional way without affecting its multifunctionality.

## Claims

1. Multifunctional flower box (10), comprising a container body (11), a lower tray portion (12), a supporting plane (13), and at least one pair of rods (16), **characterised in that** the rods are capable of being irreversibly associated with respective heads (17) to form support brackets which can be fixed to the aforementioned box (10) through securing elements (18), to be inserted in suitable grilles (21) in order to support the aforementioned box (10) in a hanging position.

2. Multifunctional box (10), according to claim 1, **characterised in that** it foresees a pair of side rims (20), in whose lower parts the aforementioned grilles (21) are present, the aforementioned side rims (20) being capable of being used as guides, for the aforementioned pair of rods (16).

3. Multifunctional box (10), according to claim 2, **characterised in that** the aforementioned rods (16) ensure the safe hanging through the insertion of a shear pin (18).

4. Multifunctional box (10), according to claim 1, **characterised in that** it comprises a threaded regulation knob(14) and a rear regulator plate (15).

5. Multifunctional box (10), according to claim 1, **characterised in that** the aforementioned heads (17) of the support brackets can be used as wedges and fixed to the wall, with a screw or with a peg, for hanging the aforementioned box (10) to the wall.

6. Multifunctional box (10), according to claim 1, **characterised in that** the aforementioned rods (16) of the support brackets can be used for coupling two of the aforementioned boxes (10) with their backs to the railings.

7. Multifunctional box (10), according to claim 1, **characterised in that** all of its components are realised in thermoplastic material.

8. Multifunctional box (10) according to claim 1, **characterised in that** all of its elements can be housed inside the space formed between box and tray, in order to allow the easy transportation of the box (10).

## Patentansprüche

1. Multifunktionaler Blumenkasten (10) mit einem Behälterkörper (11), einem unteren Wannenbereich (12), einer Stützebene (13) und wenigstens einem Stangenpaar (16), **dadurch gekennzeichnet, daß** die Stangen irreversibel mit zugehörigen Kopfteilen (17) verbindbar sind, um Stützträger zu bilden, die an dem vorgenannten Kasten (10) durch Befestigungselemente (18) befestigbar sind, um in geeignete Gitter (21) eingeführt zu werden, so daß der vorgenannte Kasten (10) in einer hängenden Stellung gestützt wird.

2. Multifunktionaler Kasten (10) nach Anspruch 1, **dadurch gekennzeichnet, daß** ein Paar Seitenränder (20) vorgesehen ist, in deren unteren Abschnitten die vorgenannten Gitter (21) angeordnet sind, wobei die vorgenannten Seitenränder (20) dazu ausgelegt sind, als Führungen für das vorgenannte Stangenpaar (16) verwendet zu werden.

3. Multifunktionaler Kasten (10) nach Anspruch 2, **dadurch gekennzeichnet, daß** die vorgenannten Stangen (16) das sichere Anhängen durch das Einführen eines Scherstifts (18) sicherstellen.

4. Multifunktionaler Kasten (10) nach Anspruch 1, **dadurch gekennzeichnet, daß** er wenigstens einen mit Gewinde versehenen Regelknopf (14) und eine hintere Regulierplatte (15) aufweist.

5. Multifunktionaler Kasten (10) nach Anspruch 1, **dadurch gekennzeichnet, daß** die vorgenannten Kopfteile (17) der Stützträger als Keile verwendbar und mit einer Schraube oder einem Bolzen an der Wand befestigbar sind, um den vorgenannten Kasten (10) an der Wand anzuhängen.

6. Multifunktionaler Kasten (10) nach Anspruch 1, **dadurch gekennzeichnet, daß** die vorgenannten Stangen (16) der Stützträger zur Kopplung von zwei der vorgenannten Kästen (10) mit ihren Rückseiten an das Geländer verwendbar sind.

7. Multifunktionaler Kasten (10) nach Anspruch 1, **dadurch gekennzeichnet, daß** alle seine Komponenten aus einem thermoplastischen Material hergestellt sind.

8. Multifunktionaler Kasten (10) nach Anspruch 1, **dadurch gekennzeichnet, daß** alle seine Elemente innerhalb des zwischen Kasten und Wanne gebildeten Raums unterbringbar sind, um einen einfachen Transport des Kastens (10) zu ermöglichen.

## Revendications

1. Boîte à fleurs à fonctions multiples (10) comprenant un corps de récipient (11), une partie de plateau inférieur (12), un plan de support (13) et au moins une paire de tiges (16) **caractérisée en ce que** les tiges sont capables d'être associées de manière irréversible aux têtes respectives (17) afin de former des supports qui peuvent être fixés à la boîte mentionnée ci-dessus (10) par le biais d'éléments de fixation (18), devant être insérés dans des grilles convenables (21) afin de supporter la boîte mentionnée ci-dessus (10) dans une position suspendue.

2. Boîte à fonctions multiples (10) selon la revendication 1, **caractérisée en ce qu'**elle prévoit une paire de bords latéraux (20), dans lesquels des parties inférieures des grilles mentionnées ci-dessus (21) sont présentes, les bords latéraux susmentionnés (20) étant capables d'être utilisés en tant que guides, pour la paire de tiges (16) mentionnée ci-dessus.

3. Boîte à fonctions multiples (10), selon la revendication 2, **caractérisée en ce que** les tiges mentionnées ci-dessus (16) assurent la suspension sûre grâce à l'insertion d'une goupille de cisaillement (18).

4. Boîte à fonctions multiples (10) selon la revendication 1, **caractérisée en ce qu'**elle comprend un bouton de régulation fileté (14) et une platine de régulateur arrière (15).

5. Boîte à fonctions multiples (10) selon la revendication 1, **caractérisée en ce que** les têtes mentionnées ci-dessus (17) des supports peuvent être utilisées en tant que cales et fixées au mur, avec une vis ou avec un goujon, pour suspendre la boîte mentionnée ci-dessus (10) au mur.

6. Boîte à fonctions multiples (10) selon la revendication 1, **caractérisée en ce que** les tiges mentionnées ci-dessus (16) des supports peuvent être utilisées pour coupler deux des boîtes mentionnées ci-dessus (10) avec leurs dos par rapport aux rampes.

7. Boîte à fonctions multiples (10) selon la revendication 1, **caractérisée en ce que** la totalité de ses composants est réalisée en matériau thermoplastique.

8. Boîte à fonctions multiples (10) selon la revendication 1, **caractérisée en ce que** la totalité de ses éléments peut être logée à l'intérieur de l'espace formé entre la boîte et le plateau, afin de permettre le transport facile de la boîte (10).
